# FASCICULE DE BREVET EUROPEEN

(11) **EP 3 160 759 B1**
(45) Date de publication et mention de la délivrance du brevet: **23.05.2018**
(21) Numéro de dépôt: 15732241.3
(22) Date de dépôt: 26.06.2015
(51) Int. Cl.: B60C 1/00, C08L 9/00, C08L 9/06

(54) **PNEUMATIQUE POURVU D'UNE BANDE DE ROULEMENT COMPRENANT UN ÉLASTOMÈRE THERMOPLASTIQUE ET UN ÉLASTOMÈRE DIÉNIQUE**
REIFEN MIT EINER LAUFFLÄCHE MIT EINEM THERMOPLASTISCHEN ELASTOMER UN EINEM DIENELASTOMER
TYRE PROVIDED WITH A TREAD COMPRISING A THERMOPLASTIC ELASTOMER AND A DIENE ELASTOMER

(30) Priorité: 30.06.2014 FR 1456127
(43) Date de publication de la demande: 03.05.2017
(73) Titulaire: Compagnie Générale des Etablissements Michelin, 63000 Clermont-Ferrand (FR)
(72) Inventeur: CHOUVEL, Christophe, F-63040 Clermont-Ferrand Cedex 9 (FR); CUSTODERO, Emmanuel, F-63040 Clermont-Ferrand Cedex 9 (FR); GREIVELDINGER, Marc, F-63040 Clermont-Ferrand Cedex 9 (FR)
(74) Mandataire: Sidhu, Alban
(86) Numéro de dépôt international: PCT/EP2015/064566
(87) Numéro de publication internationale: WO 2016/001094

(56) Documents cités:
- WO-A1-2012/152686
- US-A1- 2002 037 962
- US-A1- 2006 089 447
- US-B1- 6 329 459

## Description

La présente invention est relative aux pneumatiques munis d'une bande de roulement.

Dans un pneumatique conventionnel, la bande de roulement comprend à titre d'élastomère, des élastomères diéniques. Ce type de bande de roulement est bien connu et décrit dans de nombreux documents.

Dans quelques documents, il a été décrit des bandes de roulement comprenant un mélange d'élastomère diénique et d'élastomère thermoplastique. Par exemple, le document WO 2012/105984 décrit des compositions de bande de roulement comprenant un copolymère styrène-butadiène (SBR), un polybutadiène (BR) et un élastomère thermoplastique styrénique (TPS) insaturé ainsi qu'une charge renforçante pour améliorer la résistance à l'usure des pneumatiques.

Dans le cadre du compromis entre l'amélioration de la résistance au roulement et de l'amélioration de l'adhérence des pneumatiques sur sol mouillé, les demanderesses ont décrit précédemment dans le document WO 2012/152686 un pneumatique muni d'une bande de roulement comprenant au moins un élastomère thermoplastique, ledit élastomère thermoplastique étant un copolymère bloc comprenant au moins un bloc élastomère et au moins un bloc thermoplastique, et le taux total d'élastomère thermoplastique étant compris dans un domaine variant de 65 à 100 pce (parties en poids pour cent parties d'élastomère). En particulier, les demanderesses ont décrit une bande de roulement comprenant comme élastomère thermoplastique le copolymère tribloc styrène-isoprène-styrène (SIS) comme permettant une diminution de la résistance au roulement par rapport aux bandes de roulement de composition classique.

Un objectif constant des manufacturiers de pneumatique est de diminuer la résistance au roulement des pneumatiques.

A présent, les demanderesses ont trouvé de manière surprenante qu'un pneumatique pourvu d'une bande de roulement comprenant un élastomère thermoplastique spécifique et un élastomère diénique permettait d'obtenir une très forte diminution de la résistance au roulement.

L'invention a donc pour objet un pneumatique comprenant une bande de roulement, un sommet avec une armature de sommet, deux flancs, deux bourrelets, une armature de carcasse ancrée aux deux bourrelets et s'étendant d'un flanc à l'autre, caractérisé en ce que la bande de roulement comprend une composition à base d'au moins un élastomère diénique, à un taux compris entre 35 et 99 pce (parties en poids pour cent parties d'élastomère), un élastomère thermoplastique, à un taux compris entre 1 et 65 pce, ledit élastomère thermoplastique étant un copolymère bloc comprenant au moins un bloc élastomère de type copolymère statistique butadiène-styrène éventuellement hydrogéné et au moins un bloc thermoplastique de type styrénique.

Préférentiellement, l'invention concerne un pneumatique tel que défini ci-dessus, dans lequel la masse moléculaire moyenne en nombre de l'élastomère thermoplastique est comprise entre 30 000 et 500 000 g/mol.

Préférentiellement également, l'invention concerne un pneumatique tel que défini ci-dessus, dans lequel le ou les blocs élastomères du copolymère bloc sont choisis parmi les élastomères ayant une température de transition vitreuse inférieure à 25°C.

Préférentiellement encore, l'invention concerne un pneumatique tel que défini ci-dessus, dans lequel le ou les blocs élastomères SBR ont une teneur en styrène comprise dans un domaine allant de 10 à 60%. De préférence, le ou les blocs élastomères SBR ont une teneur en liaisons -1,2 pour la partie butadiénique comprise dans un domaine allant de 4% à 75% molaire, et une teneur en liaisons -1,4 comprise dans un domaine allant de 20% et 96% molaire. De préférence également, le ou les blocs élastomères SBR sont hydrogénés de telle manière qu'une proportion allant de 25 à 100 % molaire des doubles liaisons dans la portion butadiène sont hydrogénées, plus préférentiellement, une proportion allant de 50 à 100 % molaire, et de préférence de 80 à 100 % molaire des doubles liaisons dans la portion butadiène sont hydrogénées.

De manière préférentielle, l'invention concerne un pneumatique tel que défini ci-dessus, dans lequel le ou les blocs thermoplastiques styréniques du copolymère bloc sont choisis parmi les polymères ayant une température de transition vitreuse supérieure à 80°C, et, dans le cas d'un bloc thermoplastique semi cristallin, une température de fusion supérieure à 80°C. De préférence, la fraction de bloc thermoplastique styrénique dans le copolymère bloc est comprise dans un domaine allant de 5 à 70 %. De préférence, le ou les blocs thermoplastiques du copolymère bloc sont choisis parmi les polystyrènes, préférentiellement parmi les polystyrènes obtenus à partir de monomères styréniques choisis dans le groupe constitué par le styrène non substitué, les styrènes substitués et leurs mélanges ; et plus préférentiellement, parmi les polystyrènes obtenus à partir de monomères styréniques choisis dans le groupe constitué par le styrène non substitué, les méthylstyrènes, le para-tertio-butylstyrène, les chlorostyrènes, les bromostyrènes, les fluorostyrènes, le para-hydroxy-styrène, et les mélanges de ces derniers. Très préférentiellement, le ou les blocs thermoplastiques du copolymère bloc sont choisis parmi les polystyrènes obtenus à partir de monomères styréniques choisis dans le groupe constitué par le styrène non substitué, l'o-méthylstyrène, le m-méthylstyrène, le p-méthylstyrène, l'alpha-méthylstyrène, l'alpha-2-diméthylstyrène, l'alpha-4-diméthylstyrène, le diphényléthylène, le para-tertio-butylstyrène, l'o-chlorostyrène, le m-chlorostyrène, le p-chlorostyrène, le 2,4-dichlorostyrène, le 2,6-dichlorostyrène, le 2,4,6-trichlorostyrène, l'o-bromostyrène, le m-bromostyrène, le p-bromostyrène, le 2,4-dibromostyrène, le 2,6-dibromostyrène, le 2,4,6-tribromostyrène, l'o-fluorostyrène, le m-fluorostyrène, le p-fluorostyrène, le 2,4-difluorostyrène, le 2,6-difluorostyrène, le 2,4,6-trifluorostyrène, le para-hydroxy-styrène, et les mélanges de ces derniers. Plus préférentiellement, le ou les blocs thermoplastiques du copolymère bloc sont obtenus à partir de polystyrène non substitué.

Préférentiellement, l'invention concerne un pneumatique tel que défini ci-dessus, dans lequel l'élastomère diénique (c'est-à-dire le ou les élastomères diéniques) est choisi dans le groupe constitué par les élastomères diéniques essentiellement insaturés, et les mélanges de ces derniers. De préférence, l'élastomère diénique est choisi dans le groupe constitué par les homopolymères obtenus par polymérisation d'un monomère diène conjugué ayant de 4 à 12 atomes de carbone, les copolymères obtenus par copolymérisation d'un ou plusieurs diènes conjugués entre eux ou avec un ou plusieurs composés vinyle aromatique ayant de 8 à 20 atomes de carbone, et les mélanges de ces derniers. Plus préférentiellement, l'élastomère diénique est choisi dans le groupe constitué par les polybutadiènes, les polyisoprènes de synthèse, le caoutchouc naturel, les copolymères de butadiène, les copolymères d'isoprène et les mélanges de ces élastomères. De manière très préférentielle, l'élastomère diénique est choisi dans le groupe constitué par les copolymères de butadiène et de styrène.

De manière préférentielle, l'invention concerne un pneumatique tel que défini ci-dessus, dans lequel le taux d'élastomère diénique est compris dans un domaine allant de 40 à 90 pce et le taux d'élastomère thermoplastique est compris dans un domaine allant de 10 à 60 pce. Préférentiellement, le taux d'élastomère diénique est compris dans un domaine allant de 50 à 80 pce et le taux d'élastomère thermoplastique est compris dans un domaine allant de 20 à 50 pce. Plus préférentiellement, le taux d'élastomère diénique est compris dans un domaine allant de 55 à 70 pce et le taux d'élastomère thermoplastique est compris dans un domaine allant de 30 à 45 pce.

De manière préférentielle également, l'invention concerne un pneumatique tel que défini ci-dessus, dans lequel la composition de la bande de roulement comprend en outre de la charge renforçante, à un taux inférieur à 80 pce, de préférence inférieur à 60 pce. De préférence, le taux de charge renforçante est de 3 à 50 pce, de préférence de 5 à 40 pce. Préférentiellement, la charge renforçante est du noir de carbone et/ou de la silice. Selon un mode de réalisation préféré, la charge renforçante majoritaire est de la silice. Alternativement et préférentiellement également, la charge renforçante majoritaire est du noir de carbone.

De préférence, l'invention concerne un pneumatique tel que défini ci-dessus, dans lequel la composition de la bande de roulement ne comprend pas de système plastifiant ou en comprend avec un taux total de plastifiant inférieur à 20 pce, de préférence inférieur à 15 pce. Plus préférentiellement, la composition de la bande de roulement ne comprend pas de système plastifiant ou en comprend avec un taux total de plastifiant inférieur à 10 pce, de préférence inférieur à 5 pce.

De manière préférentielle, l'invention concerne un pneumatique tel que défini ci-dessus, dans lequel la composition de la bande de roulement comprend en outre un système de réticulation.

L'invention concerne plus particulièrement les pneumatiques destinés à équiper des véhicules sans moteur tels que les bicyclettes, ou des véhicules à moteur de type tourisme, SUV ("Sport Utility Vehicles"), deux roues (notamment motos), avions, comme des véhicules industriels choisis parmi camionnettes, « Poids-lourd » - c'est-à-dire métro, bus, engins de transport routier (camions, tracteurs, remorques), véhicules hors-la-route tels qu'engins agricoles ou de génie civil -, autres véhicules de transport ou de manutention.

### DESCRIPTION DETAILLEE DE L'INVENTION

Dans la présente description, sauf indication expresse différente, tous les pourcentages (%) indiqués sont des pourcentages en masse.

Par ailleurs, le terme « pce » (en anglais « phr ») signifie au sens de la présente demande de brevet, partie en poids pour cent parties d'élastomère, thermoplastiques et non thermoplastiques confondus. Au sens de la présente invention, les élastomères thermoplastiques (TPE) font partie des élastomères.

D'autre part, tout intervalle de valeurs désigné par l'expression « entre a et b » représente le domaine de valeurs allant de plus de a à moins de b (c'est-à-dire bornes a et b exclues) tandis que tout intervalle de valeurs désigné par l'expression « de a à b » signifie le domaine de valeurs allant de a jusqu'à b (c'est-à-dire incluant les bornes strictes a et b).

Enfin, lorsqu'on fait référence à un composé « majoritaire », on entend au sens de la présente invention, que ce composé est majoritaire parmi les composés du même type dans la composition, c'est-à-dire que c'est celui qui représente la plus grande quantité en masse parmi les composés du même type. Ainsi, par exemple, une charge renforçante majoritaire est la charge renforçante représentant la plus grande masse par rapport à la masse totale des charges renforçantes dans la composition. Au contraire, un composé « minoritaire » est un composé qui ne représente pas la fraction massique la plus grande parmi les composés du même type.

### 1. Composition de la bande de roulement

Le pneumatique selon l'invention a pour caractéristique essentielle de comprendre une bande de roulement, un sommet avec une armature de sommet, deux flancs, deux bourrelets, une armature de carcasse ancrée aux deux bourrelets et s'étendant d'un flanc à l'autre, dans lequel la bande de roulement comprend une composition à base d'au moins un élastomère diénique, à un taux compris entre 35 et 99 pce (parties en poids pour cent parties d'élastomère), un élastomère thermoplastique, à un taux compris entre 1 et 65 pce, ledit élastomère thermoplastique étant un copolymère bloc comprenant au moins un bloc élastomère de type copolymère statistique butadiène-styrène éventuellement hydrogéné et au moins un bloc thermoplastique de type styrénique.

### 1.1 Elastomère thermoplastique (TPE) spécifique à blocs SBR et PS

De manière générale, les élastomères thermoplastiques (en abrégé « TPE ») ont une structure intermédiaire entre polymères thermoplastiques et élastomères. Ce sont des copolymères à blocs, constitués de blocs rigides, thermoplastiques, reliés par des blocs souples, élastomères.

Pour les besoins de l'invention, ledit élastomère thermoplastique spécifique est un copolymère bloc comprenant au moins un bloc élastomère de type copolymère statistique butadiène-styrène (SBR) éventuellement hydrogéné et au moins un bloc thermoplastique de type copolymère styrénique (PS). Dans ce qui suit, lorsqu'il est fait référence à un bloc SBR, il s'agit donc d'un bloc élastomérique majoritairement (c'est-à-dire à plus de 50% en poids, de préférence à plus de 80 % en poids) composé d'un copolymère statistique de butadiène et de styrène, ce copolymère pouvant ou non être hydrogéné, et, lorsqu'il est fait référence à un bloc styrénique, il s'agit d'un bloc composé majoritairement (c'est-à-dire à plus de 50% en poids, de préférence à plus de 80 % en poids) d'un polymère styrénique tel qu'un polystyrène.

### 1.1.1. Structure du TPE à blocs SBR et PS

La masse moléculaire moyenne en nombre (notée Mn) du TPE à blocs SBR et PS est préférentiellement comprise entre 30 000 et 500 000 g/mol, plus préférentiellement comprise entre 40 000 et 400 000 g/mol. En dessous des minima indiqués, la cohésion entre les chaînes d'élastomère SBR du TPE à blocs SBR et PS, notamment en raison de sa dilution éventuelle (en présence d'une huile d'extension), risque d'être affectée ; d'autre part, une augmentation de la température d'usage risque d'affecter les propriétés mécaniques, notamment les propriétés à la rupture, avec pour conséquence une performance diminuée "à chaud". Par ailleurs, une masse Mn trop élevée peut être pénalisante pour la mise en oeuvre. Ainsi, on a constaté qu'une valeur comprise dans un domaine de 50 000 à 300 000 g/mol et mieux, de 60 000 à 150 000 était particulièrement bien adaptée, notamment à une utilisation du TPE à blocs SBR et PS dans une composition pour bande de roulement de pneumatique.

La masse moléculaire moyenne en nombre (Mn) de l'élastomère TPE à blocs SBR et PS est déterminée de manière connue, par chromatographie d'exclusion stérique (SEC). Par exemple dans le cas des élastomères thermoplastiques styréniques, l'échantillon est préalablement solubilisé dans du tétrahydrofuranne à une concentration d'environ 1 g/l ; puis la solution est filtrée sur filtre de porosité 0,45 µm avant injection. L'appareillage utilisé est une chaîne chromatographique « WATERS alliance ». Le solvant d'élution est le tétrahydrofuranne, le débit de 0,7 ml/min, la température du système de 35°C et la durée d'analyse de 90 min. On utilise un jeu de quatre colonnes WATERS en série, de dénominations commerciales « STYRAGEL » (« HMW7 », « HMW6E » et deux « HT6E »). Le volume injecté de la solution de l'échantillon de polymère est de 100 µl. Le détecteur est un réfractomètre différentiel « WATERS 2410 » et son logiciel associé d'exploitation des données chromatographiques est le système « WATERS MILLENIUM ». Les masses molaires moyennes calculées sont relatives à une courbe d'étalonnage réalisée avec des étalons de polystyrène. Les conditions sont adaptables par l'homme du métier.

La valeur de l'indice de polydispersité Ip (rappel : Ip = Mw/Mn avec Mw masse moléculaire moyenne en poids et Mn masse moléculaire moyenne en nombre) du TPE à blocs SBR et PS est de préférence inférieure à 3 ; plus préférentiellement inférieure à 2 et encore plus préférentiellement inférieure à 1,5.

De manière connue, les TPE à blocs SBR et PS présentent deux pics de température de transition vitreuse (Tg, mesurée selon ASTM D3418), la température la plus basse étant relative à la partie élastomère SBR du TPE à blocs SBR et PS, et la température la plus haute étant relative à la partie thermoplastique PS du TPE à blocs SBR et PS. Ainsi, les blocs souples SBR des TPE à blocs SBR et PS se définissent par une Tg inférieure à la température ambiante (25°C), tandis que les blocs rigides PS ont une Tg supérieure à 80°C.

Dans la présente demande, lorsqu'il est fait référence à la température de transition vitreuse du TPE à blocs SBR et PS, il s'agit de la Tg relative au bloc élastomère SBR. Le TPE à blocs SBR et PS présente préférentiellement une température de transition vitreuse ("Tg") qui est préférentiellement inférieure ou égale à 25°C, plus préférentiellement inférieure ou égale à 10°C. Une valeur de Tg supérieure à ces minima peut diminuer les performances de la bande de roulement lors d'une utilisation à très basse température ; pour une telle utilisation, la Tg du TPE à blocs SBR et PS est plus préférentiellement encore inférieure ou égale à -10°C. De manière préférentielle également, la Tg du TPE à blocs SBR et PS est supérieure à -100°C.

Les TPE à blocs SBR et PS peuvent être des copolymères avec un petit nombre de blocs (moins de 5, typiquement 2 ou 3), auquel cas ces blocs ont de préférence des masses élevées, supérieures à 15000 g/mol. Ces TPE à blocs SBR et PS peuvent être par exemple des copolymères diblocs, comprenant un bloc thermoplastique et un bloc élastomère. Ce sont souvent aussi des élastomères triblocs avec deux segments rigides reliés par un segment souple. Les segments rigides et souples peuvent être disposés linéairement, en étoile ou branchés. Typiquement, chacun de ces segments ou blocs contient souvent au minimum plus de 5, généralement plus de 10 unités de base (par exemple unités styrène et unités butadiène/styrène pour un copolymère blocs styrène/ SBR/ styrène).

Les TPE à blocs SBR et PS peuvent aussi comprendre un grand nombre de blocs (plus de 30, typiquement de 50 à 500) plus petits, auquel cas ces blocs ont de préférence des masses peu élevées, par exemple de 500 à 5000 g/mol, ces TPE à blocs SBR et PS seront appelés TPE à blocs SBR et PS multiblocs par la suite, et sont un enchaînement blocs élastomères - blocs thermoplastiques.

Selon une première variante, le TPE à blocs SBR et PS se présente sous une forme linéaire. Par exemple, le TPE à blocs SBR et PS est un copolymère dibloc : bloc PS / bloc SBR. Le TPE à blocs SBR et PS peut aussi être un copolymère tribloc : bloc PS / bloc SBR / bloc PS, c'est-à-dire un bloc élastomère central et de deux blocs thermoplastiques terminaux, à chacune des deux extrémités du bloc élastomère. Egalement, le TPE à blocs SBR et PS multibloc peut être un enchaînement linéaire de blocs élastomères SBR - blocs thermoplastiques PS.

Selon une autre variante de l'invention, le TPE à blocs SBR et PS utile pour les besoins de l'invention se présente sous une forme étoilée à au moins trois branches. Par exemple, le TPE à blocs SBR et PS peut alors se composer d'un bloc élastomère SBR étoilé à au moins trois branches et d'un bloc thermoplastique PS, situé à l'extrémité de chacune des branches du bloc élastomère SBR. Le nombre de branches de l'élastomère central peut varier, par exemple de 3 à 12, et de préférence de 3 à 6.

Selon une autre variante de l'invention, le TPE à blocs SBR et PS se présente sous une forme branchée ou dendrimère. Le TPE à blocs SBR et PS peut alors se composer d'un bloc élastomère SBR branché ou dendrimère et d'un bloc thermoplastique PS, situé à l'extrémité des branches du bloc élastomère dendrimère.

### 1.1.2. Nature des blocs élastomères

Les blocs élastomères du TPE à blocs SBR et PS pour les besoins de l'invention, peuvent être tous les élastomères de type copolymère statistique de butadiène et de styrène (SBR) connus de l'homme de l'art.

La fraction de bloc élastomère SBR dans le TPE à blocs SBR et PS est comprise dans un domaine allant de 30 à 95 %, préférentiellement de 40 à 92 %, plus préférentiellement de 50 à 90%.

Ces blocs SBR possèdent de préférence une Tg (température de transition vitreuse) mesurée par DSC selon la norme ASTM D3418 de 1999, inférieure à 25°C, préférentiellement inférieure à 10°C, plus préférentiellement inférieure à 0°C et très préférentiellement inférieure à -10°C. De manière préférentielle également, la Tg des blocs SBR est supérieure à -100°C. Conviennent notamment, les blocs SBR ayant une Tg comprise entre 20°C et -70°C et plus particulièrement entre 0°C et -50°C.

De manière bien connue, le bloc SBR comprend une teneur en styrène, une teneur en liaisons -1,2 de la partie butadiénique, et une teneur en liaisons -1,4 de la partie butadiénique, cette dernière se composant d'une teneur en liaisons trans-1,4 et d'une teneur en liaisons cis-1,4 lorsque la partie butadiénique n'est pas hydrogénée.

De manière préférentielle, on utilise notamment un bloc SBR ayant une teneur en styrène comprise, par exemple dans un domaine allant de 10 à 60% en poids, de préférence de 20% à 50% en poids, et pour la partie butadiénique, une teneur en liaisons -1,2 comprise dans un domaine allant de 4% à 75% (% molaire), et une teneur en liaisons -1,4 comprise dans un domaine allant de 20% et 96% (% molaire).

Selon le taux d'hydrogénation du bloc SBR, la teneur en double liaison de la partie butadiénique du bloc SBR peut diminuer jusqu'à une teneur de 0% molaire pour un bloc SBR totalement hydrogéné. De préférence, dans les TPE à blocs SBR et PS utiles aux besoins de l'invention, le bloc élastomère SBR est hydrogéné de telle manière qu'une proportion allant de 25 à 100 % molaire des doubles liaisons dans la portion butadiène sont hydrogénées. Plus préférentiellement de 50 à 100% molaire et de manière très préférentielle de 80 à 100% molaire des doubles liaisons dans la portion butadiène sont hydrogénées.

Au sens de la présente invention, la partie styrénique des blocs SBR peut être composée par des monomères choisis parmi les monomères styréniques, et notamment choisis dans le groupe constitué par le styrène non substitué, les styrènes substitués et leurs mélanges. Parmi les styrènes substitués, on choisira préférentiellement ceux choisis dans le groupe constitué par les méthylstyrènes (préférentiellement l'o-méthylstyrène, le m-méthylstyrène et le p-méthylstyrène, l'alpha-méthylstyrène, l'alpha-2-diméthylstyrène, l'alpha-4-diméthylstyrène et le diphényléthylène), le para-tertio-butylstyrène, les chlorostyrènes (préférentiellement l'o-chlorostyrène, le m-chlorostyrène, le p-chlorostyrène, le 2,4-dichlorostyrène, le 2,6-dichlorostyrène et le 2,4,6-trichlorostyrène), les bromostyrènes (préférentiellement l'o-bromostyrène, le m-bromostyrène, le p-bromostyrène, le 2,4-dibromostyrène, le 2,6-dibromostyrène et les 2,4,6-tribromostyrène), les fluorostyrènes (préférentiellement l'o-fluorostyrène, le m-fluorostyrène, le p-fluorostyrène, le 2,4-difluorostyrène, le 2,6-difluorostyrène et les 2,4,6-trifluorostyrène), le para-hydroxy-styrène, et les mélanges de ces derniers.

Selon un mode de réalisation préférentiel de l'invention, les blocs élastomères du TPE à blocs SBR et PS présentent au total, une masse moléculaire moyenne en nombre ("Mn") allant de 25 000 g/mol à 350 000g/mol, de préférence de 35 000 g/mol à 250 000 g/mol de manière à conférer au TPE à blocs SBR et PS de bonnes propriétés élastomériques et une tenue mécanique suffisante et compatible avec l'utilisation en bande de roulement de pneumatique.

Le bloc élastomère peut également être constitué de plusieurs blocs élastomères tels que définis ci-dessus.

### 1.1.3. Nature des blocs thermoplastiques

On utilisera pour la définition des blocs thermoplastiques la caractéristique de température de transition vitreuse (Tg) du bloc rigide thermoplastique. Cette caractéristique est bien connue de l'homme du métier. Elle permet notamment de choisir la température de mise en oeuvre industrielle (transformation). Dans le cas d'un polymère (ou d'un bloc de polymère) amorphe, la température de mise en oeuvre est choisie sensiblement supérieure à la Tg. Dans le cas spécifique d'un polymère (ou d'un bloc de polymère) semi-cristallin, on peut observer une température de fusion alors supérieure à la température de transition vitreuse. Dans ce cas, c'est plutôt la température de fusion (Tf) qui permet de choisir la température de mise en oeuvre du polymère (ou bloc de polymère) considéré. Ainsi, par la suite, lorsqu'on parlera de « Tg (ou Tf, le cas échéant) », il faudra considérer qu'il s'agit de la température utilisée pour choisir la température de mise oeuvre.

Pour les besoins de l'invention, les élastomères TPE à blocs SBR et PS comprennent un ou plusieurs bloc(s) thermoplastique(s) ayant de préférence une Tg (ou Tf, le cas échéant) supérieure ou égale à 80°C et constitué(s) à partir de monomères styréniques polymérisés (PS). Préférentiellement, ce bloc thermoplastique a une Tg (ou Tf, le cas échéant) comprise dans un domaine variant de 80°C à 250°C. De préférence, la Tg

(ou Tf, le cas échéant) de ce bloc thermoplastique est préférentiellement de 80°C à 200°C, plus préférentiellement de 80°C à 180°C.

La fraction de bloc thermoplastique PS dans le TPE à blocs SBR et PS est comprise dans un domaine allant de 5 à 70 %, préférentiellement de 8 à 60 %, plus préférentiellement de 10 à 50%.

Les blocs thermoplastiques du TPE à blocs SBR sont des blocs polystyrènes. Les polystyrènes préférentiels sont obtenus à partir de monomères styréniques choisis dans le groupe constitué par le styrène non substitué, les styrènes substitués et leurs mélanges. Parmi les styrènes substitués, on choisira préférentiellement ceux choisis dans le groupe constitué par les méthylstyrènes (préférentiellement l'o-méthylstyrène, le m-méthylstyrène et le p-méthylstyrène, l'alpha-méthylstyrène, l'alpha-2-diméthylstyrène, l'alpha-4-diméthylstyrène et le diphényléthylène), le para-tertio-butylstyrène, les chlorostyrènes (préférentiellement l'o-chlorostyrène, le m-chlorostyrène, le p-chlorostyrène, le 2,4-dichlorostyrène, le 2,6-dichlorostyrène et le 2,4,6-trichlorostyrène), les bromostyrènes (préférentiellement l'o-bromostyrène, le m-bromostyrène, le p-bromostyrène, le 2,4-dibromostyrène, le 2,6-dibromostyrène et le 2,4,6-tribromostyrène), les fluorostyrènes (préférentiellement l'o-fluorostyrène, le m-fluorostyrène, le p-fluorostyrène, le 2,4-difluorostyrène, le 2,6-difluorostyrène et le 2,4,6-trifluorostyrène), le para-hydroxy-styrène, et les mélanges de ces derniers.

De manière très préférentielle, les blocs thermoplastiques du TPE à blocs SBR sont des blocs obtenus à partir de polystyrène non substitué.

Selon une variante de l'invention, le bloc polystyrène tel que défini ci-dessus peut être copolymérisé avec au moins un autre monomère de manière à former un bloc thermoplastique ayant une Tg (ou Tf, le cas échéant) telle que définie ci-dessus.

A titre d'illustration, cet autre monomère susceptible de copolymériser avec le monomère polymérisé, peut être choisi parmi les monomères diènes, plus particulièrement, les monomères diènes conjugués ayant 4 à 14 atomes de carbone, et les monomères de type vinylaromatiques ayant de 8 à 20 atomes de carbone.

Selon l'invention, les blocs thermoplastiques du TPE à blocs SBR et PS présentent au total, une masse moléculaire moyenne en nombre ("Mn") allant de 5 000 g/mol à 150 OOOg/mol, de manière à conférer au TPE à blocs SBR et PS de bonnes propriétés élastomériques et une tenue mécanique suffisante et compatible avec l'utilisation en bande de roulement de pneumatique.

Le bloc thermoplastique peut également être constitué de plusieurs blocs thermoplastiques tels que définis ci-dessus.

### 1.1.4. Exemples de TPE à blocs SBR et PS

A titre d'exemples d'élastomères TPE à blocs SBR et PS commercialement disponibles, on peut citer les élastomères de type SOE, commercialisés par la société Asahi Kasei sous la dénomination « SOE S1611 », « SOE L605 » ou encore « SOE L606 ».

### 1.1.5. Quantité de TPE à blocs SBR et PS

Dans la composition de bande de roulement du pneumatique de l'invention, l'élastomère TPE (c'est à dire le ou les élastomères TPE) à blocs SBR et PS représente entre 1 et 65%, de préférence de 10 à 60% en poids, plus préférentiellement de 20 à 50% et très préférentiellement de 30 à 45% en poids de l'ensemble des élastomères présents dans la composition élastomère.

Ainsi, la quantité d'élastomère TPE à blocs SBR et PS est comprise dans un domaine qui varie entre 1 et 65 pce, préférentiellement de 10 à 60 pce, mieux de 20 à 50 pce et notamment de 30 à 45 pce. En effet, avec une quantité d'élastomère TPE à blocs SBR et PS inférieure à 1 pce l'effet sur la diminution de la résistance au roulement est peu notable tandis qu'au-delà de 65 pce d'élastomère TPE à blocs SBR et PS, la composition prend une nature thermoplastique avec pour conséquence une très forte évolution des propriétés avec la température.

### 1.2 Elastomère Diénique

La composition de la bande de roulement selon l'invention, comporte au moins un (c'est-à-dire un ou plusieurs) caoutchouc diénique. Le taux total d'élastomère diénique est compris entre 35 et 99 pce, de préférence dans un domaine variant de 40 à 90 pce, préférentiellement de 50 à 80 pce, plus préférentiellement de 55 à 70 pce.

Par élastomère ou caoutchouc « diénique », doit être compris de manière connue un (on entend un ou plusieurs) élastomère issu au moins en partie (i.e. ; un homopolymère ou un copolymère) de monomères diènes (monomères porteurs de deux doubles liaisons carbone carbone, conjuguées ou non).

Ces élastomères diéniques peuvent être classés dans deux catégories : "essentiellement insaturés" ou "essentiellement saturés".

On entend en général par "essentiellement insaturé", un élastomère diénique issu au moins en partie de monomères diènes conjugués, ayant un taux de motifs ou unités d'origine diénique (diènes conjugués) qui est supérieur à 15% (% en mole). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

C'est ainsi que des élastomères diéniques tels que certains caoutchoucs butyl ou les copolymères de diènes et d'alpha oléfines type EPDM peuvent être qualifiés d'élastomères diéniques "essentiellement saturés" (taux de motifs d'origine diénique faible ou très faible, toujours inférieur à 15%).

Ces définitions étant données, on entend plus particulièrement par élastomère diénique, quelque soit la catégorie ci-dessus, susceptible d'être utilisé dans les compositions conformes à l'invention:
(a) - tout homopolymère obtenu par polymérisation d'un monomère diène conjugué ayant de 4 à 12 atomes de carbone;
(b) - tout copolymère obtenu par copolymérisation d'un ou plusieurs diènes conjugués entre eux ou avec un ou plusieurs composés vinyle aromatique ayant de 8 à 20 atomes de carbone;
(c) - un copolymère ternaire obtenu par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène;
(d) - un copolymère d'isobutène et d'isoprène (caoutchouc diénique butyl), ainsi que les versions halogénées, en particulier chlorées ou bromées, de ce type de copolymère.

Tout type d'élastomère diénique peut être utilisé dans l'invention. Lorsque la composition contient un système de vulcanisation, on utilise de préférence, des élastomères essentiellement insaturés, en particulier des types (a) et (b) ci-dessus, pour la fabrication de la bande de roulement du pneumatique selon la présente invention.

A titre de diènes conjugués conviennent notamment le butadiène-1,3, le 2-méthyl-1,3-butadiène, les 2,3-di(alkyle en C₁-C₅)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène. A titre de composés vinylaromatiques conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Les copolymères peuvent contenir entre 99% et 20% en poids d'unités diéniques et entre 1% et 80% en poids d'unités vinylaromatiques. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent par exemple être préparés en dispersion ou en solution ; ils peuvent être couplés et/ou étoilés ou encore fonctionnalisés avec un agent de couplage et/ou d'étoilage ou de fonctionnalisation. Pour un couplage à du noir de carbone, on peut citer par exemple des groupes fonctionnels comprenant une liaison C-Sn ou des groupes fonctionnels aminés tels que benzophénone par exemple ; pour un couplage à une charge inorganique renforçante telle que silice, on peut citer par exemple des groupes fonctionnels silanol ou polysiloxane ayant une extrémité silanol (tels que décrits par exemple dans FR 2 740 778 ou US 6 013 718), des groupes alkoxysilane (tels que décrits par exemple dans FR 2 765 882 ou US 5 977 238), des groupes carboxyliques (tels que décrits par exemple dans WO 01/92402 ou US 6 815 473, WO 2004/096865 ou US 2006/0089445) ou encore des groupes polyéthers (tels que décrits par exemple dans EP 1 127 909 ou US 6 503 973). Comme autres exemples d'élastomères fonctionnalisés, on peut citer également des élastomères (tels que SBR, BR, NR ou IR) du type époxydés.

### 1.3. Charge nanométrique ou renforçante

Le ou les élastomères décrits précédemment sont suffisants à eux seuls pour que soit utilisable la bande de roulement selon l'invention. De manière préférentielle, la composition selon l'invention peut comprendre en outre une charge renforçante.

Lorsqu'une charge renforçante est utilisée, on peut utiliser tout type de charge habituellement utilisée pour la fabrication de pneumatiques, par exemple une charge organique telle que du noir de carbone, une charge inorganique telle que de la silice, ou encore un coupage de ces deux types de charge, notamment un coupage de noir de carbone et de silice. Préférentiellement pour les besoins de l'invention, la charge renforçante majoritaire pourra être de la silice, ou alternativement du noir de carbone.

Comme noirs de carbone conviennent tous les noirs de carbone conventionnellement utilisés dans les pneumatiques (noirs dits de grade pneumatique). Par exemple, on citera plus particulièrement les noirs de carbone renforçants des séries 100, 200 ou 300 (grades ASTM), comme par exemple les noirs N115, N134, N234, N326, N330, N339, N347, N375, ou encore, selon les applications visées, les noirs de séries plus élevées (par exemple N660, N683, N772), voire même N990.

Par "charge inorganique renforçante", doit être entendu dans la présente demande, par définition, toute charge inorganique ou minérale (quelles que soient sa couleur et son origine (naturelle ou de synthèse), encore appelée charge "blanche", charge "claire" voire "charge non noire" ("non-black filler") par opposition au noir de carbone, capable de renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

L'état physique sous lequel se présente la charge inorganique renforçante est indifférent, que ce soit sous forme de poudre, de microperles, de granulés, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles telles que décrites ci-après.

Comme charges inorganiques renforçantes conviennent notamment des charges minérales du type siliceux, en particulier de la silice (SiO₂), ou du type alumineuse, en particulier de l'alumine (Al₂O₃). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g. A titres de silices précipitées hautement dispersibles (dites "HDS"), on citera par exemple les silices "Ultrasil" 7000 et "Ultrasil" 7005 de la société Degussa, les silices "Zeosil" 1165MP, 1135MP et 1115MP de la société Rhodia, la silice "Hi-Sil" EZ150G de la société PPG, les silices "Zeopol" 8715, 8745 et 8755 de la Société Huber, les silices à haute surface spécifique telles que décrites dans la demande WO 03/16837.

Pour coupler la charge inorganique renforçante à l'élastomère, on peut par exemple utiliser de manière connue un agent de couplage (ou agent de liaison) au moins bifonctionnel destiné à assurer une connexion suffisante, de nature chimique et/ou physique, entre la charge inorganique (surface de ses particules) et l'élastomère, en particulier des organosilanes ou des polyorganosiloxanes bifonctionnels.

Le taux volumique de charge renforçante, optionnelle, dans la composition (noir de carbone et/ou charge inorganique renforçante telle que silice) est compris dans un domaine de 0 à 20%, ce qui correspond à un taux de 0 à 50 pce pour une composition sans plastifiant. Préférentiellement la composition comprend moins de 80 pce de charge renforçante (notamment entre 1 et 80 pce), de préférence moins de 60 pce (notamment entre 1 à 60 pce), plus préférentiellement un taux compris dans un domaine allant de 3 à 50 pce, mieux de 5 à 40 pce.

### 1.4. Plastifiants

Le ou les élastomères décrits précédemment sont suffisants à eux seuls pour que soit utilisable la bande de roulement selon l'invention.

Ainsi, selon un mode de réalisation préférentiel de l'invention, la composition élastomère précédemment décrite ne comporte pas d'agent plastifiant de type huile ou résine thermoplastique, ou, si elle en comporte, elle en comporte moins de 20 pce (notamment entre 0,5 et 20 pce), de préférence moins de 15 pce (notamment entre 0,5 et 15 pce), plus préférentiellement moins de 10 pce (notamment entre 0,5 et 10 pce), mieux, moins de 5 pce (notamment entre 0,5 et 5 pce). De manière préférentielle également la composition ne comprend pas d'agent plastifiant. De manière connue de l'homme du métier, on appelle agent plastifiant une huile (ou huile plastifiante ou huile d'extension) ou une résine plastifiante dont la fonction est de faciliter la mise en oeuvre de la bande de roulement, particulièrement son intégration au pneumatique par un abaissement du module et une augmentation du pouvoir tackifiant.

On peut utiliser toute huile, de préférence à caractère faiblement polaire, apte à étendre, plastifier des élastomères, notamment thermoplastiques. A température ambiante (23°C), ces huiles, plus ou moins visqueuses, sont des liquides (c'est-à-dire, pour rappel, des substances ayant la capacité de prendre à terme la forme de leur contenant), par opposition notamment à des résines ou des caoutchoucs qui sont par nature solides. On peut également utiliser tout type de résine plastifiante connue de l'homme du métier.

L'homme du métier saura, à la lumière de la description et des exemples de réalisation qui suivent, ajuster la quantité de plastifiant en fonction de l'élastomère TPE à blocs SBR et PS utilisé (comme indiqué précédemment) ; des conditions particulières d'usage du pneumatique muni de la bande de roulement, et notamment en fonction de l'objet pneumatique dans lequel elle est destinée à être utilisée.

### 1.5. Additifs divers

Le ou les élastomères thermoplastiques décrits précédemment sont suffisants à eux seuls pour que soit utilisable la bande de roulement selon l'invention.

Toutefois, selon un mode de réalisation préférentiel de l'invention, la composition élastomère précédemment décrite peut comporter également, les divers additifs usuellement présents dans les bandes de roulements connues de l'homme du métier. On choisira par exemple un ou plusieurs additifs choisis parmi les agents de protection tels que antioxydants ou antiozonants, anti-UV, les divers agents de mise en oeuvre ou autres stabilisants, ou encore les promoteurs aptes à favoriser l'adhésion au reste de la structure de l'objet pneumatique.

Egalement et à titre optionnel, la composition de la bande de roulement de l'invention peut contenir un système de réticulation connu de l'homme du métier, tel qu'un système de vulcanisation comprenant du soufre ou un agent donneur de soufre, et optionnellement, un ou plusieurs accélérateurs et/ ou activateurs de vulcanisation.

### 2. Préparation

Les compositions de bande de roulement pour le pneumatique selon l'invention sont fabriquées dans des mélangeurs appropriés, en utilisant deux phases de préparation successives bien connues de l'homme du métier: une première phase de travail ou malaxage thermo-mécanique (parfois qualifiée de phase "non-productive") à haute température, jusqu'à une température maximale comprise entre 110°C et 190°C, de préférence entre 130°C et 180°C, suivie d'une deuxième phase de travail mécanique (parfois qualifiée de phase "productive") à plus basse température, typiquement inférieure à 110°C, par exemple entre 60°C et 100°C, phase de finition au cours de laquelle est incorporé le système de réticulation ou vulcanisation; de telles phases ont été décrites par exemple dans les demandes EP-A-0501227, EP-A-0735088, EP-A-0810258, WO00/05300 ou WO00/05301. Les élastomères TPE à blocs SBR et PS sont introduits lors de la première étape, directement sous leur forme commerciale, par exemple sous la forme de billes ou de granulés.

La bande de roulement pour le pneumatique selon l'invention est ensuite extrudée de façon classique, afin de réaliser le profilé. La bande de roulement est ensuite sculptée dans le moule de cuisson du pneumatique.

Cette bande de roulement peut-être montée sur un pneumatique de manière classique, ledit pneumatique comprenant en plus de la bande de roulement selon l'invention, un sommet, deux flancs et deux bourrelets, une armature de carcasse ancrée aux deux bourrelets, et une armature de sommet.

### EXEMPLES DE RÉALISATION DE L'INVENTION

Des compositions de bande de roulement pour pneumatique selon l'invention ont été préparées comme indiqué précédemment.

### Tests effectués au laboratoire sur les compositions

### - Propriétés dynamiques

Les propriétés dynamiques G* et tan(δ)max sont mesurées sur un viscoanalyseur (Metravib V A4000), selon la norme ASTM D 5992 - 96. On enregistre la réponse d'un échantillon de composition vulcanisée (éprouvette cylindrique de 4 mm d'épaisseur et de 400 mm2 de section), soumis à une sollicitation sinusoïdale en cisaillement simple alterné, à la fréquence de 10Hz, dans les conditions normales de température (23°C) selon la norme ASTM D 1349 - 99. On effectue un balayage en amplitude de déformation crête à crête de 0,1 à 50% (cycle aller), puis de 50% à 1 % (cycle retour). Les résultats exploités sont le module complexe de cisaillement dynamique (G*) et le facteur de perte (tan δ). Pour le cycle retour, on indique la valeur maximale de tan δ observée (tan(δ)max), ainsi que l'écart de module complexe (DG*) entre les valeurs à 0,1% et à 50% de déformation (effet Payne).

Pour la valeur de tan(δ)max à 23°C, plus la valeur est basse, plus la composition aura une hystérèse faible et donc une résistance au roulement faible. Pour plus de lisibilité les résultats seront indiqués selon la performance, en base 100, la valeur 100 étant attribuée au témoin. Un résultat inférieur à 100 indiquant une diminution de la performance de résistance au roulement (augmentation de la valeur de tan(δ) max à 23°C), et inversement, un résultat supérieur à 100, indiquera une augmentation de la performance (diminution de la valeur de tan(δ)max à 23°C).

### - Coefficient de frottement dynamique

Les mesures de coefficient de frottement dynamique ont été réalisées selon une méthode identique à celle décrite par L. Busse, A. Le Gal, et M. Küppel (Modelling of Dry and Wet Friction of Silica Filled Elastomers on Self-Affine Road Surfaces, Elastomere Friction, 2010, 51, p. 8). Les éprouvettes sont réalisées par moulage suivi d'une vulcanisation d'une éprouvette carrée (50mmx50mm) de 6 mm d'épaisseur. Après fermeture du moule, celui-ci est placé dans une presse à plateaux chauffants à 150°C pendant 50 minutes à une pression de 16 bars. Le sol utilisé pour réaliser ces mesures est une carotte prélevée sur un sol routier réel en béton bitumineux de type BBTM (norme NF P 98-137). L'éprouvette est soumise à un mouvement de glissement en translation parallèlement au plan du sol. La vitesse de glissement Vg est fixée à 0.03 m/sec. La contrainte normale appliquée sn est de 100 kPa. Ces conditions sont décrites ci-après par « conditions de sol sec ». On mesure en continu la contrainte tangentielle st opposée au mouvement de l'éprouvette sur le sol. Le rapport entre la contrainte tangentielle st et la contrainte normale sn donne le coefficient de frottement dynamique µ. Les valeurs indiquées dans le tableau ci-dessous sont les valeurs de coefficient de frottement dynamique, obtenues en régime permanent après stabilisation de la valeur de la contrainte tangentielle st. Pour plus de lisibilité les résultats seront indiqués selon la performance, en base 100, la valeur 100 étant attribuée au témoin. Un résultat inférieur à 100 indiquant une diminution de la performance d'adhérence sur sol sec, et inversement, un résultat supérieur à 100, indiquera une augmentation de la performance d'adhérence sur sol sec.

### Tests effectués sur pneumatiques

Des pneumatiques selon l'invention ont ensuite été préparés selon les méthodes habituelles, avec les constituants classiques connus de l'homme du métier : un sommet, deux flancs et deux bourrelets, une armature de carcasse ancrée aux deux bourrelets, une armature de sommet et une bande de roulement, la bande de roulement étant celle décrite pour les besoins de la présente invention.

Les propriétés des pneumatiques selon l'invention peuvent être évaluées par des tests effectués sur des pneumatiques comme indiqué ci-après.

### - Test de mesure de résistance au roulement

La résistance au roulement des pneumatiques a été mesurée sur un volant, selon la méthode ISO 87-67 (1992). Pour plus de lisibilité les résultats seront indiqués en performance en base 100, la valeur 100 étant attribuée au témoin. Un résultat inférieur à 100 indiquant une diminution de la performance concernée, c'est-à-dire une augmentation de la résistance au roulement, et inversement, un résultat supérieur à 100, indiquera une augmentation de la performance concernée, c'est-à-dire une diminution de la résistance au roulement.

### - Test de mesure de résistance à l'usure

La résistance à l'usure des pneumatiques a été mesurée par un essai dit de roulage sur circuit, avec un véhicule petit poids lourds de marque IVECO 4305 FL avec une charge théorique de 1850kg/pneu à l'arrière et 1150kg/pneu à l'avant, le tout avec une pression de 7bars. Le circuit est parcouru dans des conditions permettant d'user les pneumatiques de manière reproductible entre le témoin et la solution testée : les véhicules évoluent en convoi, ce qui garantit que les pneumatiques sont soumis aux mêmes conditions de vitesse, d'accélérations, de température, et de nature des sols. Le circuit de roulage est parcouru jusqu'à atteindre une distance supérieure à 2500 km.

On considère le pneumatique avant droit du véhicule. Le pneumatique témoin et la solution testée sont pesés avant le roulage et après plus de 2500 km. La masse perdue par le témoin fixe une performance usure à 100 %. Une solution présentant une valeur supérieure à 100 représente un résultat amélioré, c'est-à-dire une masse perdue inférieure.

### - Test d'adhérence : Freinage sur sol sec, avec un système ABS

Les pneumatiques sont montés sur un véhicule petit poids lourds de marque Canter modèle 6C15, chaque essieu étant lesté à son poids maximal autorisé, et la distance nécessaire pour passer de 90 km/h à 20 km/h est mesurée lors d'un freinage brutal sur sol sec (béton bitumineux). Une solution présentant une valeur supérieure à 100 représente un résultat amélioré, c'est-à-dire une distance de freinage plus courte.

### EXEMPLE

Des compositions de bande de roulement de pneumatique conformes à l'invention (A1, A2, A3 et A4) ont étés préparées comme indiqué précédemment et comparée à un témoin : une composition de bande de roulement de pneumatique témoin (A0). Les compositions de ces bandes de roulement sont présentées dans le tableau 1 ci-dessous.

**Tableau 1**

| Composition | A-0 | A-1 | A-2 | A-3 | A-4 |
|---|---|---|---|---|---|
| BR (1) | 15 | 15 | 15 | 0 | 0 |
| SBR (2) | 85 | 51 | 51 | 60 | 60 |
| Elastomère TPE (3) | 0 | 34 | 34 | 40 | 40 |
| Noir de carbone (4) | 5 | 5 | 5 | 5 | 5 |
| Silice (5) | 70 | 70 | 26 | 26 | 26 |
| Agent de couplage (6) | 6 | 6 | 2 | 2 | 2 |
| Huile (7) | 2 | 2 | 0 | 2 | 0 |
| Résine (8) | 15 | 15 | 0 | 15 | 0 |
| Cire anti-ozone | 1,5 | 1,5 | 1,5 | 1,5 | 1,5 |
| Agent anti-oxydant (9) | 2 | 2 | 2 | 2 | 2 |
| DPG (10) | 1,3 | 1,3 | 0,5 | 0,5 | 0,5 |
| ZnO (11) | 0,5 | 0,5 | 0,5 | 0,5 | 0,5 |
| Acide stéarique (12) | 2 | 2 | 2 | 2 | 2 |
| CBS (13) | 1,7 | 1,7 | 1,7 | 1,7 | 1,7 |
| Soufre | 1 | 1 | 1 | 1 | 1 |

| | | | | | |
|---|---|---|---|---|---|
| (1) BR avec 4% de motif 1,2 et 93% de motif 1,4-cis (Tg = -106°C) ; (2) SSBR solution (taux exprimés en SBR sec : 41% de styrène, 24 % des motifs polybutadiène en 1-2 et 50% des motifs polybutadiène en 1-4 trans (Tg = - 25°C) ; (3) Elastomère thermoplastique SOE « SOE L606 » de la société Asahi Kasei ; (4) Noir de carbone N234 ; (5) Silice (« Zeosil 1165MP » de la société Rhodia) ; (6) agent de couplage TESTP (« Si69 » de la société Degussa) ; (7) Huile MES « Catenex SNR » de la société Shell ; (8) Résine C5/C9 « CrayValley Wingtack » de la société STS ; (9) N-1,3-diméthylbutyl-N-phénylparaphénylènediamine (« Santoflex 6-PPD » de la société Flexsys) ; (10) DPG = Diphénylguanidine (« Perkacit DPG » de la société Flexsys) ; (11) oxyde de zinc (grade industriel - société Umicore) ; (12) stéarine (« Pristerene » de la société Uniquema); (13) N-cyclohexyl-2-benzothiazyl-sulfénamide (« Santocure CBS » de la société Flexsys). | | | | | |

On peut noter dans ces compositions la possibilité de baisser le taux de charge renforçante et de plastifiant vis-à-vis de la composition témoin, grâce à l'utilisation d'élastomères TPE à blocs SBR et PS en coupage avec l'élastomère diénique dans la composition de la bande de roulement.

Les performances de l'invention ont été évaluées au laboratoire, et les résultats sont présentés au tableau 2 ci-dessous.

**Tableau 2**

| Composition | A-0 | A-1 | A-2 | A-3 | A-4 |
|---|---|---|---|---|---|
| Performance hystérèse (base 100) | 100 | 96 | 161 | 154 | 185 |
| Performance adhérence sur sol sec (base 100) | 100 | 101 | 108 | 108 | 100 |

Les résultats présentés au tableau 2 mettent en évidence que les compositions selon l'invention permettent, sans dégradation de performance (A1), de remplacer une partie de l'élastomère diénique par un TPE à blocs SBR et PS, et même permettent une amélioration notable de l'équilibre des performances (A2 à A4) qu'on peut attendre en résistance au roulement et en freinage sur sol sec. Par ailleurs, il est très surprenant au vu de l'état de la technique, que le TPE à blocs SBR et PS en coupage avec un élastomère diénique, permettent de diminuer notablement la quantité de charge et de plastifiant dans la composition de la bande de roulement, permettant ainsi une économie de moyen et une facilité de mise en oeuvre.

Les performances de l'invention ont ensuite été évaluées en pneumatique (225/75 R16). A cette fin, un pneumatique B1 muni d'une bande de roulement de composition A4 conforme à l'invention a été comparée à un témoin B0 muni d'une bande de roulement de composition A0. Ces pneumatiques ont été évalués en test de résistance au roulement, usure et freinage sur sol sec. Les résultats sont présentés dans le tableau 3.

**Tableau 3**

| Pneumatique | B-0 | B-1 |
|---|---|---|
| Formulation de la bande de roulement | A-0 | A-4 |
| Performance Résistance au roulement (base 100) | 100 | 119 |
| Performance Usure (base 100) | 100 | 101 |
| Performance Freinage Sec (base 100) | 100 | 99 |

Les résultats présentés au tableau 3 mettent en évidence que la bande de roulement de composition A4 selon l'invention permet une amélioration notable de performance en résistance au roulement, tout en conservant des performances similaires en résistance à l'usure et en freinage sur sol sec.

## Revendications

1. Pneumatique comprenant une bande de roulement, un sommet avec une armature de sommet, deux flancs, deux bourrelets, une armature de carcasse ancrée aux deux bourrelets et s'étendant d'un flanc à l'autre, **caractérisé en ce que** la bande de roulement comprend une composition à base d'au moins un élastomère diénique, à un taux compris entre 35 et 99 pce (parties en poids pour cent parties d'élastomère), un élastomère thermoplastique, à un taux compris entre 1 et 65 pce, ledit élastomère thermoplastique étant un copolymère bloc comprenant au moins un bloc élastomère de type copolymère statistique butadiène-styrène éventuellement hydrogéné et au moins un bloc thermoplastique de type styrénique.

2. Pneumatique selon la revendication 1, dans lequel la masse moléculaire moyenne en nombre de l'élastomère thermoplastique est comprise entre 30 000 et 500 000 g/mol.

3. Pneumatique selon l'une quelconque des revendications précédentes dans lequel le ou les blocs élastomères SBR ont une teneur en styrène comprise dans un domaine allant de 10 à 60%.

4. Pneumatique selon l'une quelconque des revendications précédentes dans lequel le ou les blocs élastomères SBR ont une teneur en liaisons -1,2 pour la partie butadiénique comprise dans un domaine allant de 4% à 75% molaire, et une teneur en liaisons -1,4 comprise dans un domaine allant de 20% et 96% molaire.

5. Pneumatique selon l'une quelconque des revendications précédentes dans lequel le ou les blocs élastomères SBR sont hydrogénés de telle manière qu'une proportion allant de 25 à 100 % molaire des doubles liaisons dans la portion butadiène sont hydrogénées.

6. Pneumatique selon l'une quelconque des revendications précédentes dans lequel le ou les blocs thermoplastiques styréniques du copolymère bloc sont choisis parmi les polymères ayant une température de transition vitreuse supérieure à 80°C, et, dans le cas d'un bloc thermoplastique semi cristallin, une température de fusion supérieure à 80°C.

7. Pneumatique selon l'une quelconque des revendications précédentes dans lequel le ou les blocs thermoplastiques du copolymère bloc sont choisis parmi les polystyrènes.

8. Pneumatique selon la revendication précédente dans lequel le ou les blocs thermoplastiques du copolymère bloc sont choisis parmi les polystyrènes obtenus à partir de monomères styréniques choisis dans le groupe constitué par le styrène non substitué, les styrènes substitués et leurs mélanges.

9. Pneumatique selon la revendication précédente dans lequel le ou les blocs thermoplastiques du copolymère bloc sont obtenus à partir de polystyrène non substitué.

10. Pneumatique selon l'une quelconque des revendications précédentes, dans lequel l'élastomère diénique est choisi dans le groupe constitué par les élastomères diéniques essentiellement insaturés, et les mélanges de ces élastomères.

11. Pneumatique selon l'une quelconque des revendications précédentes, dans lequel le taux d'élastomère diénique est compris dans un domaine allant de 40 à 90 pce et le taux d'élastomère thermoplastique est compris dans un domaine allant de 10 à 60 pce.

12. Pneumatique selon l'une quelconque des revendications précédentes, dans lequel la composition de la bande de roulement comprend en outre de la charge renforçante, à un taux inférieur à 80 pce, de préférence inférieur à 60 pce.

13. Pneumatique selon l'une quelconque des revendications précédentes, dans lequel la charge renforçante est du noir de carbone et/ou de la silice.

14. Pneumatique selon l'une quelconque des revendications précédentes, dans lequel la composition de la bande de roulement ne comprend pas de système plastifiant ou en comprend avec un taux total de plastifiant inférieur à 20 pce, de préférence inférieur à 15 pce.

15. Pneumatique selon la revendication précédente, dans lequel la composition de la bande de roulement comprend en outre un système de réticulation.

## Patentansprüche

1. Luftreifen, umfassend eine Lauffläche, einen Scheitel mit einer Scheitelbewehrung, zwei Flanken, zwei Wülste, eine Karkassenbewehrung, die an den beiden Wülsten verankert ist und sich von einer Flanke zur anderen erstreckt, **dadurch gekennzeichnet, dass** die Lauffläche eine Zusammensetzung auf der Basis mindestens eines Dienelastomers mit einem Gehalt zwischen 35 und 99 pce (Gewichtsteile für hundert Teile Elastomer) und eines thermoplastischen Elastomers mit einem Gehalt zwischen 1 und 65 pce umfasst, wobei das thermoplastische Elastomer ein Blockcopolymer ist, das mindestens einen elastomeren Block vom Typ eines statistischen Butadien-Styrol-Copolymers, gegebenenfalls hydriert, und mindestens einen thermoplastischen Block vom Styrol-Typ umfasst.

2. Luftreifen nach Anspruch 1, wobei die zahlenmittlere Molekularmasse des thermoplatischen Elastomers zwischen 30.000 und 500.000 g/mol liegt.

3. Luftreifen nach einem der vorhergehenden Ansprüche, wobei der oder die elastomeren Blöcke SBR einen Gehalt an Styrol im Bereich von 10 bis 60 % aufweisen.

4. Luftreifen nach einem der vorhergehenden Ansprüche, wobei der oder die elastomeren Blöcke SBR einen Gehalt an Bindungen -1,2 für den Butadien-Teil in einem Bereich von 4 Mol-% bis 75 Mol-% und einen Gehalt an Bindungen -1,4 in einem Bereich von 20 Mol-% bis 96 Mol-% aufweisen.

5. Luftreifen nach einem der vorhergehenden Ansprüche, wobei der oder die elastomeren Blöcke SBR derart hydriert sind, dass ein Anteil von 25 bis 100 Mol-% der Doppelbindungen im Butadien-Teil hydriert sind.

6. Luftreifen nach einem der vorhergehenden Ansprüche, wobei der oder die thermoplastischen Styrol-Blöcke des Blockcopolymers ausgewählt sind aus Polymeren mit einer Glasübergangstemperatur von mehr als 80 °C, und im Fall eines semikristallinen thermoplastischen Blocks mit einer Schmelztemperatur von mehr als 80 °C.

7. Luftreifen nach einem der vorhergehenden Ansprüche, wobei der oder die thermoplastischen Blöcke des Blockcopolymers aus Polystyrolen ausgewählt sind.

8. Luftreifen nach dem vorhergehenden Anspruch, wobei der oder die thermoplastischen Blöcke des Blockcopolymers ausgewählt sind aus Polystyrolen, die von Styrol-Monomeren erhalten werden, ausgewählt aus der Gruppe bestehend aus nicht-substituiertem Styrol, substituierten Styrolen und ihren Mischungen.

9. Luftreifen nach dem vorhergehenden Anspruch, wobei der oder die thermoplastischen Blöcke des Blockcopolymers von nicht-substituiertem Polystyrol erhalten werden.

10. Luftreifen nach einem der vorhergehenden Ansprüche, wobei das Dienelastomer ausgewählt ist aus der Gruppe bestehend aus im Wesentlichen ungesättigten Dienelastomeren und Mischungen dieser Elastomere.

11. Luftreifen nach einem der vorhergehenden Ansprüche, wobei der Gehalt an Dienelastomer in einem Bereich von 40 bis 90 pce liegt, und der Gehalt an thermoplastischem Elastomer in einem Bereich von 10 bis 60 pce liegt.

12. Luftreifen nach einem der vorhergehenden Ansprüche, wobei die Zusammensetzung der Lauffläche außerdem einen verstärkenden Füllstoff mit einem Gehalt von weniger als 80 pce, vorzugsweise weniger als 60 pce, umfasst.

13. Luftreifen nach einem der vorhergehenden Ansprüche, wobei der verstärkende Füllstoff Ruß und/oder Siliciumdioxid ist.

14. Luftreifen nach einem der vorhergehenden Ansprüche, wobei die Zusammensetzung der Lauffläche kein Weichmachersystem umfasst oder ein solches mit einem Gesamtgehalt an Weichmacher von weniger als 20 pce, vorzugsweise weniger als 15 pce, umfasst.

15. Luftreifen nach dem vorhergehenden Anspruch, wobei die Zusammensetzung der Lauffläche außerdem ein Vernetzungssystem umfasst.

## Claims

1. Tyre comprising a tread, a crown with a crown reinforcement, two sidewalls, two beads, a carcass reinforcement anchored to the two beads and extending from one sidewall to the other, **characterized in that** the tread comprises a composition based on at least one diene elastomer, at a content of between 35 and 99 phr (parts by weight per hundred parts of elastomer), a thermoplastic elastomer with a content between 1 and 65 phr, said thermoplastic elastomer being a block copolymer comprising at least one elastomer block of optionally hydrogenated butadiene/styrene random copolymer type and at least one thermoplastic block of styrene type.

2. Tyre according to Claim 1, wherein the number-average molecular weight of the thermoplastic elastomer is between 30 000 and 500 000 g/mol.

3. Tyre according to any one of the preceding claims, wherein the SBR elastomer block(s) have a styrene content within a range extending from 10% to 60%.

4. Tyre according to any one of the preceding claims, wherein the SBR elastomer block(s) have a content of 1,2- bonds for the butadiene part within a range extending from 4 mol% to 75 mol% and a content of 1,4- bonds within a range extending from 20 mol% to 96 mol%.

5. Tyre according to any one of the preceding claims, wherein the SBR elastomer block(s) are hydrogenated such that a proportion extending from 25 mol% to 100 mol% of the double bonds in the butadiene portion are hydrogenated.

6. Tyre according to any one of the preceding claims, wherein the thermoplastic styrene block(s) of the block copolymer are chosen from polymers having a glass transition temperature of greater than 80°C and, in the case of a semicrystalline thermoplastic block, a melting point of greater than 80°C.

7. Tyre according to any one of the preceding claims, wherein the thermoplastic block(s) of the block copolymer are chosen from polystyrenes.

8. Tyre according to the preceding claim, wherein the thermoplastic block(s) of the block copolymer are chosen from polystyrenes obtained from styrene monomers selected from the group consisting of unsubstituted styrene, substituted styrenes and mixtures thereof.

9. Tyre according to the preceding claim, wherein the thermoplastic block(s) of the block copolymer are obtained from unsubstituted polystyrene.

10. Tyre according to any one of the preceding claims, wherein the diene elastomer is selected from the group consisting of essentially unsaturated diene elastomers and mixtures of these elastomers.

11. Tyre according to any one of the preceding claims, wherein the content of diene elastomer is within a range extending from 40 to 90 phr and the content of thermoplastic elastomer is within a range extending from 10 to 60 phr.

12. Tyre according to any one of the preceding claims, wherein the tread composition also comprises reinforcing filler, at a content of less than 80 phr, preferably less than 60 phr.

13. Tyre according to any one of the preceding claims, wherein the reinforcing filler is carbon black and/or silica.

14. Tyre according to any one of the preceding claims, wherein the tread composition does not contain a plasticizing system or comprises same with a total plasticizer content of less than 20 phr, preferably less than 15 phr.

15. Tyre according to the preceding claim, wherein the tread composition also comprises a crosslinking system.
